# EUROPÄISCHE PATENTSCHRIFT

(11) **EP 0 852 454 B1**
(45) Veröffentlichungstag und Bekanntmachung des Hinweises auf die Patenterteilung: **11.02.2004**
(21) Anmeldenummer: 97120781.6
(22) Anmeldetag: 26.11.1997
(51) Int. Cl.: H05B 41/28

(54) **Betriebsschaltung für eine elektrodenlose Niederdruckentladungslampe**
Operating circuit for a low pressure electrodeless discharge lamp
Circuit pour alimenter une lampe à décharge basse pression sans électrodes

(30) Priorität: 03.12.1996 DE 19650110
(43) Veröffentlichungstag der Anmeldung: 08.07.1998
(73) Patentinhaber: Patent-Treuhand-Gesellschaft für elektrische Glühlampen mbH, 81543 München (DE)
(72) Erfinder: Statnic, Eugen, 81243 München (DE)

(56) Entgegenhaltungen:
- EP-A- 0 442 572
- WO-A-93/23798
- WO-A-98/07301
- GB-A- 2 305 311
- US-A- 5 138 236
- US-A- 5 406 177
- US-A- 5 446 350

## Beschreibung

Die vorliegende Erfindung bezieht sich auf eine Schaltung zum Betrieb einer elektrodenlosen Niederdruckgasentladungslampe.

Elektrodenlose Niederdruckgasentladungslampen stellen eine wichtige technische Neuentwicklung dar. Dabei wird die zum Zünden und zur Aufrechterhaltung des Entladungsplasmas erforderliche Spannung bzw. Leistung ohne in dem Lampenkolben angebrachte Elektroden in das Entladungsgas eingekoppelt. Das kann insbesondere durch einen geschlossenen Spulenkern geschehen, der einen Teil des Lampenkolbens umschließt und damit in das Entladungsgas eine Induktionsspannung bzw. Energie einkoppelt.

Die Erfindung geht aus von einer Schaltung zum Betrieb einer elektrodenlosen Niederdruckentladungslampe mit einem die Lampe mit Hochfrequenzleistung beaufschlagenden Lastkreis, einem Hochfrequenz-Leistungsgenerator (HF-Leistungsgenerator) mit Feldeffekttransistoren und Speicherkondensator zum Betreiben des Lastkreises und einer Ansteuerschaltung zur Ansteuerung des HF-Leistungsgenerators, wobei der Lastkreis einen seriellen Schwingkreis mit Koppelkondensator und einen zu einem Teil des Schwingkreises parallelliegenden Zweig mit einer die Lampe beaufschlagenden Spule aufweist und der Resonanzkondensator mit der Spule einen parallelen Schwingkreis bildet und beiden Schwingkreisen angehört. Eine solche Schaltung ist aus der US-A-5 406 177 bekannt.

Hinsichtlich der Verschaltung des Lastkreises selbst ist hier eine serienparallele Konfiguration gewählt. Danach wird ein Serienschwingkreis mit einem zu einem Teil des Schwingkreises parallel liegenden Zweig kombiniert, indem eine die Lampe mit Hochfrequenzleistung beaufschlagende Spule liegt. Vor der Zündung ist dieser parallele Teil wenig gedämpft, und der serielle Schaltkreis kann die für gering bedämpfte Serienschwingkreise typische ausgeprägte Resonanzspannungsüberhöhung zur Erzeugung der notwendigen Zündspannung liefern. Diese Zündspannung wird über den parallelen Teil abgegriffen und induktiv in die Entladung eingekoppelt. Nach der Zündung wird der Serienschwingkreis durch den transformierten Widerstand der Plasmaentladung stark gedämpft und dient grundsätzlich zur Strombegrenzung in der Lampe.

Bei einer elektrodenlosen Niederdruckentladungslampe können Temperaturschwankungen des Lampenspulenkerns durch Außentemperaturschwankungen, Erwärmungen von der Lampe her und dgl. sehr stark in die magnetischen Eigenschaften (Anfangs- und Amplitudenpermeabilität) und damit die Induktivität der Lampenspule eingehen. Die resultierende Frequenzverstimmung kann vor allem bei festfrequenter Ansteuerung des Leistungsgenerators zu Betriebsproblemen führen. Zum Beispiel kann es vorkommen, dass die Lampe bei besonders niedriger oder bei besonders hoher Temperatur nicht mehr gezündet werden kann, weil die Resonanzfrequenz der Anordnung sich von der Steuerfrequenz des Generators zu weit entfernt.

Aufgabe der Erfindung ist es daher, das oben genannte Problem zu lösen.

Das Problem wird durch eine Schaltung mit den Merkmalen des Oberbegriffs des Anspruchs 1 gelöst, bei der der serielle Schwingkreis eine strombegrenzende Spule, üblicherweise Lampendrossel genannt, beinhaltet, die im Betriebszustand der parallelen Lampenspule hochfrequenzmäßig im wesentlichen parallel geschaltet wirkt. Wenn dann zusätzlich die

Induktivität der strombegrenzenden Spule kleiner als die der Lampenspule ist, ergibt sich eine deutliche Verringerung des Einflusses von Schwankungen der Lampenspuleninduktivität auf die äquivalente Induktivität der genannten serienparallelen Schaltung und damit auf die Resonanzfrequenz der serienparallelen Anordnung.

Durch den beschriebenen Parallelschaltungseffekt mit der strombegrenzenden Spule mit kleinerer Induktivität im Serienschwingkreis wird den Temperaturschwankungen des Lampenspulenkerns entgegengewirkt. Der Einfluss von Temperaturschwankungen im Lampenspulenkern ist auch deswegen so entscheidend, weil hier wegen der Kopplungseffizienz im Gegensatz zu der Lampendrossel ein luftspaltfreier Ferritkern, d.h. ein Kern mit möglichst kleinem Luftspalt (im Mikrometerbereich), Verwendung finden sollte.

In der US-A-5 446 350 wird zwar das obengenannte Problem, die Folgen die sich aus der Schwankung der Lampenspuleninduktivität ergeben, zu reduzieren, angesprochen. Die in dieser Patentschrift vorgeschlagene Lösung beinhaltet ein der Last zugeordnetes Netzwerk, dass, aufgrund der Aufteilung des Speicherkondensators in zwei Kondensatoren und des fehlenden parallelen Schwingkreises aus Resonanzkondensator und Lampenspule durch Einfügen eines weiteren Kondensators und einer weiteren Spule nicht mit der hier beanspruchten Schaltung vergleichbar ist.

Aus der EP 0 442 572 ist eine Schaltung mit einem parallelen Schwingkreis aus Resonanzkondensator und Lampenspule bekannt; die restliche Schaltung mit einem Ein-Transistor-Leistungsgenerator unterscheidet sich jedoch von dem hier beanspruchten Leistungsgenerator mit mehreren Transistoren und beinhaltet insbesondere keine parallel-geschaltete Wirkung zwischen Lampendrossel und zur Lampe parallel geschalteter Spule.

Die neue Schaltung soll erfindungsgemäß insbesondere für wesentlich höhere Frequenzen bei der Zündung und beim Dauerbetrieb der Lampen ausgelegt sein als aus konventionellen Schaltungen bekannt (konventionell etwa 20 bis 50 kHz) ist. Aus den höheren Frequenzen ergeben sich bei der induktiven Einkopplung der Hochfrequenzleistung in die Entladung den jeweiligen Frequenzen proportionale Induktionsspannungen. Dies ist besonders wichtig, weil durch das Weglassen der Elektroden auch die konventionellen Möglichkeiten entfallen, mit einer die Elektronenaustrittsarbeit erniedrigenden Beschichtung der Elektroden oder einer Vorheizung der Elektroden eine ausreichende Vorionisation durch Elektronenemission zu bewirken. Diese Vorionisation führt zu einer deutlichen Erniedrigung der kritischen Feldstärke zur Zündung eines Plasmas.

Die erhöhten Betriebsfrequenzen der elektrodenlosen Lampe liegen vorzugsweise über 70 kHz, besser über 200 kHz. Es ist hier von mehreren nahe beieinander liegenden Frequenzen die Rede, weil sich im allgemeinen einerseits durch Unterschiede zwischen Zündbetrieb und Normalbetrieb und andererseits durch weiter unten beschriebene Frequenzänderungen bei Änderungen äußerer oder innerer Parameter der Entladung bei variabler Temperatur Veränderungen der Arbeitsfrequenz ergeben können aufgrund der sich ändernden Umgebungstemperatur der Lampe oder der Ferritkerne.

Höhere Arbeitsfrequenzen machen es erforderlich, statt der üblicherweise verwendeten bipolaren Leistungstransistoren nun schnellere Transistoren, wie Feldeffekttransistoren, insbesondere MOS-FETs, für das oder die Schaltelemente im HF-Leistungsgenerator zu verwenden.

Die Feldeffekttransistoren benötigen jedoch einen deutlich höheren Spannungspegel zur Ansteuerung (etwa 4 V bei MOS-FETs gegenüber 0,7 V bei Siliziumbipolartransistoren). Darüber hinaus muss dieser Spannungspegel über die gesamte gewünschte Einschaltzeit aufrechterhalten werden. Nach einer erfindungsgemäßen Weiterbildung wird die notwendige Gatespannung dadurch erzeugt, dass eine durch eine resonanznahe Anregung eines Schwingkreises erzeugte Spannungsüberhöhung zur Ansteuerung eines Feldeffekttransistorgates verwendet wird. Die erforderliche aktive Einschaltzeit, d.h. die Zeit, in der die Gatespannung höher als die Schwellspannung ist, kann durch die Amplitude der resonanten Gatespannung eingestellt werden, weil die sinusnahe Spannungsschwingung bei höherer Amplitude für einen entsprechend längeren Zeitraum zwischen zwei Überquerungen der 4V-Schwelle über der Gatespannung liegt. Damit kann mit der Amplitude der Gatesteuerspannung die Betriebsfrequenz eingestellt, aufrechterhalten oder kontrolliert werden.

Eine weitere Ausgestaltung der Erfindung betrifft die Verwendung eines Transformators mit einem Ferritkern in der Ansteuerschaltung, der z.B. den die beschriebene Gateansteuerungsspannung liefernden Schwingkreis erregen kann. Es hat sich dabei als wesentlich herausgestellt, den Transformatorkern im linearen Bereich weit von der Sättigung zu betreiben, um Verzerrungen der Gate-Sinusspannung und unerwünschte Verluste zu vermeiden. Die Verzerrungen wirken der "weichen", also sinusnahen Arbeitsweise des erfindungsgemäßen Schaltungssystems entgegen. Außerdem können die Verzerrungen der Gatespannung unerwünschte Schaltzustände hervorrufen.

Ein anderer Vorteil der Gate-Sinusansteuerung liegt darin, dass unmittelbar vor dem Abschalten des Transistors eine sehr kleine Gate-Ladung, d.h. wenig Energie am Gate gespeichert ist, was zu einem sehr schnellen Drainstrom-Abschaltvorgang und somit zu sehr kleinen Abschaltverlusten führt.

Um ein insgesamt freischwingendes, resonanznahes Schaltungssystem zu erhalten, wird vorteilhafterweise die Energie für die Ansteuerschaltung dem Lastkreis entnommen. Dadurch werden die richtigen Phasenverhältnisse gesichert. Da die Feldeffekttransistoren gegenüber den Bipolartransistoren eine Spannungsansteuerung erfordern, sieht die Erfindung in einer weiteren Fortbildung vor, einen kleinen Strom aus dem Lastkreis abzugreifen, etwa durch einen die Lampenspannung abgreifenden Kondensator. Dies hat auch den Vorteil, dass die wegen der höheren Arbeitsfrequenzen kritischeren Verlustprobleme bei magnetisch stärker belasteten Transformatorkernen und die deswegen erforderliche größere Kerndimensionierung, wie bei den üblichen gesättigten Stromwandlern, in deren Primärspule der ganze Laststrom fließt, entfallen.

Darüber hinaus oder alternativ kann die Gesamtanordnung aus Lastkreis, Ansteuerschaltung und HF-Leistungsgenerator so ausgelegt sein, dass einer Frequenzverschiebung im Lastkreis durch die Rückkopplungsschleife selbsttätig entgegengewirkt wird. Zum Beispiel kann eine ungewöhnlich niedrige Lampenspulenkerntemperatur und damit sehr niedrige Induktivität zu einer erhöhten Resonanzfrequenz des Lastkreises und damit einer erhöhten Gesamtbetriebsfrequenz des freischwingenden Schaltungssystems führen. Die damit verbundene höhere Induktionsspannung in der elektrodenlosen Niederdruckgasentladungslampe führt zu einer für solche Lampen kennzeichnenden Leistungsabnahme und entsprechend höheren Entladungsspannung. Einer höheren Entladungsspannung entspricht ein linearer Anstieg der Gate-Steuerspannungsamplitude der Schalttransistoren des Leistungsgenerators und führt zu einer längeren Einschaltzeit der Schalttransistoren. Diese längere Einschaltzeit bewirkt eine Reduzierung der Arbeitsfrequenz des Leistungsgenerators und damit eine entsprechende Zunahme der Lampenleistung. Andernfalls ergibt sich durch einen Lampenleistungsanstieg, egal aus welchen Gründen, eine niedrigere Lampenspannung, d.h. eine reduzierte Amplitude der Gatespannung, die wieder eine erhöhte Betriebsfrequenz bedingt, welche die Lampenleistung reduziert. Es ergibt sich insgesamt eine selbststabilisierende Wirkung des gesamten Systems, die für die erfindungsgemäße freischwingende Resonanzansteuerung kennzeichnend ist.

Die Vorteile liegen nicht nur in der größeren Zuverlässigkeit und der geringeren Empfindlichkeit der Schaltung gegen Parameterschwankungen. Es können außerdem auch größere Bauteile-Toleranzen zugelassen werden, was zu Kostenvorteilen führt, insbesondere beim Kern der Lampenspule.

Im folgenden wird die Erfindung anhand eines Ausführungsbeispiels beschrieben. Die dabei zusätzlich offenbarten technischen Einzelheiten können auch einzeln oder in beliebiger Kombination erfindungswesentlich sein.

Dabei zeigt:
- Fig. 1: ein Schaltbild eines Ausführungsbeispiels und
- Fig. 2: ein schematisches Zeitverlaufsdiagramm zum besseren Verständnis der Arbeitsweise des Ausführungsbeispiels.

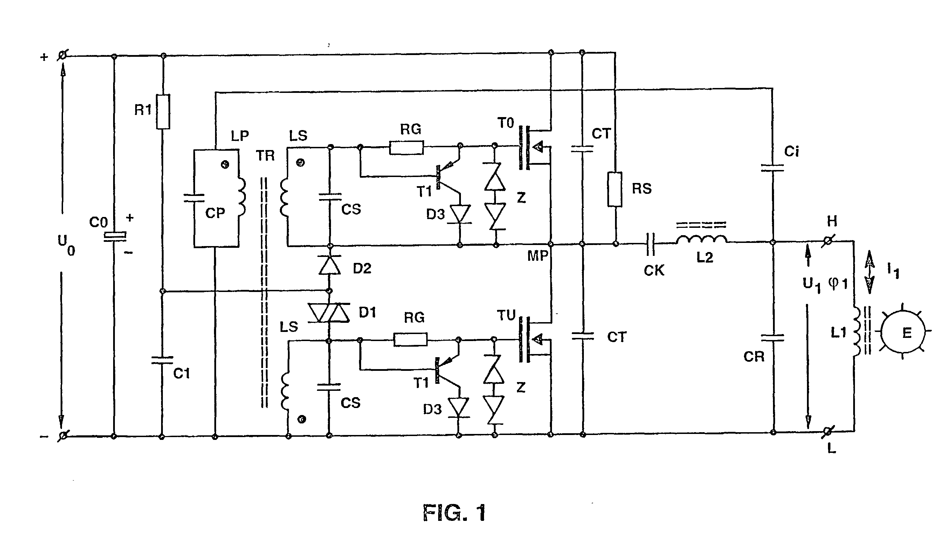

Fig. 1 zeigt eine erfindungsgemäße Betriebsschaltung als Teil eines elektronischen Vorschaltgeräts für eine elektrodenlose Niederdruckgasentladungslampe. Links am Eingang der Schaltung liegt eine gleichgerichtete Versorgungsspannung U₀, die einen Speicherelektrolytkondensator C0 lädt. Daraus wird ein Halbbrückenleistungsgenerator (Class D-Leistungsgenerator) mit zwei MOS-FET-Schaltelementen TO und TU und dem Mittenabgriff MP gespeist. Dieser treibt einen serienparallelen Lastkreis mit zwischen dem Mittenabgriff und dem negativen Versorgungszweig (Masse) liegendem Gleichstromtrenn- bzw. HF-Kopplungskondensator CK, Strombegrenzungsund Serienschwingkreisspule (Lampendrossel) L2, Serienkreisresonanzkondensator CR und dazu parallel liegender Lampenspule L1 mit Kopplungskern und als Leistungslast der Schaltung am Kopplungskern angeschlossener elektrodenloser Niederdruckgasentladungslampe E, und zwar in der aufgezählten und gezeichneten Reihenfolge.

Die Lampenspulen- bzw. Resonanzkondensatorspannung U, (negativer Versorgungszweig auf Masse) wird von einem Abgreifkondensator Ci einer Ansteuerschaltung für den Class D-Leistungsgenerator abgegriffen und einem im linearen B-H-Feld, d.h. weit vom Sättigungsbereich arbeitenden Transformator mit Ferritkern TR, Primärwicklung LP und zwei Sekundärwicklungen LS zugeführt. Die schwarzen Punkte im Schaltungsdiagramm entsprechen dem jeweiligen Wicklungsanfang der Wicklungen des Transformators TR. Man erkennt, dass die Sekundärwicklungen gegensinnig geschaltet sind. Der Transformator regt zwei Resonanzkreise an, die jeweils aus der Wicklung LS und der gesamten Gatekapazität CG des MOS-FETs TO oder TU bestehen. Die Gatekapazität ist transistorspezifisch, geht auf technologische und physikalische Effekte zurück und beinhaltet im wesentlichen die statische Eingangskapazität Ciss, sowie die dynamisch variable Miller-Kapazität zwischen Gate und Drain.

Zur Abstimmung des Abgreifzweiges der Ansteuerschaltung mit dem Kondensator Ci und der Wicklung LP ist parallel zu der Wicklung LP ein Abstimmkondensator CP vorgesehen; ebenso enthalten die Schwingkreise zur MOS-FET-Gateansteuerung Abstimmkondensatoren CS parallel zu den Wicklungen LS. Diese Abstimmkondensatoren sind kleiner als die Gatekapazität und dienen lediglich zur Feinabstimmung der Gate-Resonanzfrequenz, wobei diese maßgeblich von den anderen beschriebenen Kapazitäten und Induktivitäten vorgegeben sind.

Zur Verbesserung des Schaltverhaltens, insbesondere der Abschaltverluste dienen die eingezeichneten Widerstände RG, die Ausräum-Transistoren T1 und die Dioden D3. Die antiseriell geschalteten Schutz-Zenerdioden Z begrenzen die Gatespannung der MOS-FETs während der Zündung der Lampe. Ferner enthält das Schaltbild eine übliche Startschaltung aus den Bauelementen R1, C1, D2 und D1 (DIAC) gebildeten Sägezahngenerators, der von der Diode D2 nach dem Anlauf mit der Arbeitsfrequenz gelöscht wird. Der Widerstand RS dient zum Laden der Kondensatoren CK und CR und sichert die Vorgabe eines definierten Potentials des Mittenabgriffs MP (auf positivem Versorgungspotential) vor dem Start des Leistungsgenerators durch den beschriebenen Sägezahngenerator.

Die Kondensatoren CT sind als "Trapezkondensatoren" bekannt und begrenzen die Steilheit dU/dt des Potentialsprungs des Mittenabgriffs MP bei Änderung der Schaltzustände der MOS-FETs TO und TU und bestimmen dadurch die Umschaltzeit t_{T}.

Wichtig für die Auslegung der Schaltung ist die richtige Abstimmung der Resonanzfrequenzen und damit der Betriebsfrequenz. Im Lastkreis bestimmen die Kapazitäten CK und CR und die Induktivitäten L2 und L1 eine unbedämpfte Resonanzfrequenz f_{R}, wohingegen die Kapazitäten CP, Ci und CS sowie die dynamischen Gate-Kapazitäten CG (nicht bezeichnet) und die Induktivitäten LP und LS in der Ansteuerschaltung die Steuerresonanzfrequenz f_{D} festlegen. Die Betriebsfrequenz f₀ des gesamten Systems (mit Dämpfung durch die Lampenentladung genauso wie ohne) bildet sich als Zwischenwert der Frequenzen f_{D} und f_{R} im Betrieb dämpfungsverschoben. Da es für die sichere Funktion der Schaltung und der Lampe in allen Zuständen und bei allen Temperaturen notwendig ist, die Lampe als induktive Last, also im Strom nachlaufend, zu betreiben, wird die Steuerfrequenz f_{D} höher gewählt als die Systemresonanzfrequenz f_{R}, so dass die "freie" Betriebsfrequenz f₀ immer über der Resonanzfrequenz f_{R} liegt. Dies gilt für den schwach belasteten (vor der Zündung) genauso wie für den stark belasteten Lastkreis nach der Zündung, und zwar: f_{D}>f₀>f_{R}.

Es ist anzustreben, dass sich die rechnerischen Frequenzen f_{D}, f₀ und f_{R} jeweils um einige Prozente unterscheiden. Ein zu kleiner Unterschied birgt jedoch die Gefahr eines kapazitiven Betriebs der Halbbrücke, besonders während des Anlaufs des Leistungsgenerators und der Zündung, was eigentlich nicht erwünscht ist.

Abhängig von der angestrebten Betriebsfrequenz muss der Ringkern (Torroid) des Transformators TR hinsichtlich der Querschnittsfläche so ausgelegt sein, dass er im Nichtsättigungsbereich arbeiten kann und eine Kernverlustgrenze von etwa 0,3 W/cm³ möglichst nicht überschritten wird.

Die serienparallele Konfiguration (Anordnung) des Lastkreises hat im wesentlichen folgende Eigenschaften: Vor der Zündung ist die seriellparallele Konfiguration im wesentlichen nur durch die Kernverluste der Lampenspule L1 bedämpft, so dass der wenig belastete Resonanzkreis eine hohe resonanznahe und für die Zündung notwendige, überhöhte Spannung von 500 bis 1500 V_{eff} liefert. Dabei wirken die magnetischen Kernverluste in der Lampenspule L1, die etwa mit der Potenz 2,5 der Spannung steigen, grundsätzlich begrenzend. Der Generator verhält sich als eine kontrollierte Spannungsquelle. Nach Überschreiten der Zündspannung der Lampe wird der parallele Teil des Lastkreises (mit L1) mit dem durch die Wicklungszahl von L1 transformierten ohmschen Widerstand der Plasmaentladung RE belastet (R1 = N²·RE), die Betriebsfrequenz erhöht sich, und die Induktivität L2 wirkt als strombegrenzende Lampendrossel, so dass sich der Generator wiederum als kontrollierte Stromquelle verhält. Ein stabiler Betrieb setzt dabei voraus, dass der Gesamtwechselstromwiderstand der Generatorstromquelle (durch L2 bestimmt) immer größer als der negative differenzielle Widerstand der Lampenkennlinie ist.

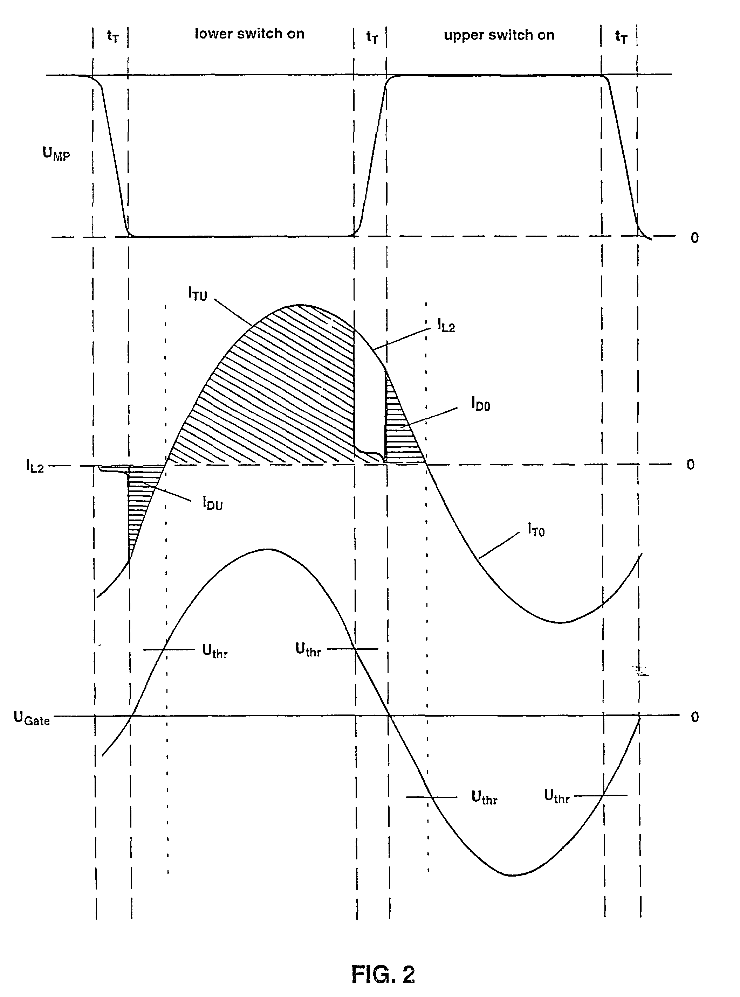

Fig. 2 zeigt schematisch Zeitverlaufskurven der Spannung U_{MP} am Mittenabgriff des Frequenzgenerators, des Lastkreisstroms I_{L2} und der Gatespannung U_{Gate} des unteren (n-Kanal) MOS-FETs TU. Das Potential des Mittenabgriffs MP liegt abwechselnd am positiven Potential der Versorgungsspannung oder auf Null. Dabei treten maßgeblich durch die parallel zu den beiden MOS-FETs geschalteten Trapezkondensatoren CT bestimmte Übergangszeiten t_{T} auf, in denen keiner der Schalter TO und TU leitend ist. Diese Übergangszeiten t_{T} sind - wie bekannt - einerseits zur Verbesserung der elektromagnetischen Verträglichkeit vorgesehen, andererseits zur Minimierung der Schaltverluste: eine zu schnell ansteigende Drain-Source-Spannung würde sich zu stark mit dem nicht beliebig schnell abfallenden Drainstrom überlappen ("Cross Over"), woraus eine hohe Abschaltverlustleistung resultieren kann. Beide Funktionen der Trapezkondensatoren, die auch durch analog wirkende andere Schaltungsvarianten ersetzt sein können, sind bei den erhöhten Arbeitsfrequenzen der erfindungsgemäßen Schaltung sehr wesentlich.

Der Leitungszustand eines MOS-FETs, der eine inhärente Bodydiode enthält, besteht zum einen aus dem in der untersten Kurve zu erkennenden Zeitabschnitt, in dem die Gatespannung unterhalb der Schwellenspannung U_{THR} des MOS-FETs liegt und zum anderen aus der Zeit, in der die Gatespannung oberhalb der Schwellenspannung U_{THR} liegt und der der Transistor leitend wird. In beiden Zeitbereichen fließt der Lastkreisstrom I_{L2} monoton steigend (mit einer durch die Lastkreisimpedanzen gegebenen Zeitkonstante). Durch die resonante Filterwirkung der Anordnung ergibt sich jedoch eine so starke relative Dämpfung der darin enthaltenen Oberschwingungen, dass im wesentlichen die in Fig. 2 gezeichnete Strom-Sinusgrundwelle vorherrscht.

Da der MOS-FET Transistor eigentlich ein bipolarer Schalter ist, kann der Strom in beiden Richtungen durch den Transistor fließen: durch den leitenden Kanal in einer Richtung und durch die Bodydiode in die inverse Richtung. Der Stromfluss durch die MOS-FETs setzt also vor der eben beschriebenen Zeitspanne, d.h. vor Erreichen der Schwellenspannung Uₜₕᵣ durch gegensinnigen Stromfluss durch die sog. "Bodydiode" des MOS-FETs ein. Damit ergibt sich der in der mittleren Kurve gezeichnete zeitlich vorgelagerte und gegensinnige Strom, der für den unteren und oberen Transistor mit I_{DU} bzw. I_{DO} bezeichnet ist. Der eigentliche Transistorstrom bei leitendem Kanal ist mit I_{TU} bzw. I_{TO} bezeichnet. Der Übergang des Stromes von der Diode zum Kanal erfolgt verlustfrei, da die Spannung am Transistor praktisch Null ist.

Während der Umschaltzeit t_{T} fließt das "fehlende Stück" des insgesamt sinusnahen Laststroms in den Trapezkondensatoren und den Ausgangskapazitäten Coss der Transistoren. Dieser Vorgang wird hier nicht näher erläutert.

Wesentlich für die Funktionsfähigkeit der Schaltung ist dabei, dass der Kanal der Transistoren leitend ist, d.h. die Schwellenspannung Uₜₕᵣ erreicht ist, bevor der Laststrom I_{L2} das Vorzeichen wechselt, d.h. noch während der Laststrom in die Bodydiode fließt.

Die Schaltung ist bei guter Auslegung für Außentemperaturen von -35 °C bis +50 °C und Bauelemente-Temperaturen zwischen -35 °C und +125 °C geeignet, kann mit gleichgerichteten Versorgungsspannungen zwischen 50 und 450 V betrieben werden und für Leistungen zwischen 20 und 1000 W ausgelegt werden. Die Arbeitsfrequenzen können zwischen 100 kHz und 3 MHz liegen. Die angegebenen Werte entsprechen den vorläufigen experimentellen Resultaten und sind in keiner Weise einschränkend zu verstehen. Für Versorgungsspannungen unterhalb 50 V kann eine Class E-Schaltungsanordnung vorteilhaft sein.

Im gezeichneten Beispiel ist nur ein Ferritkoppler mit einer Lampenspule L1 und einer Entladung E angedeutet. Bei sehr hohen Lampenleistungen (200 - 1000 W) oder sehr langen Entladungsstrecken können Zündungsprobleme auftreten, und bei großen oder anderweitig problematischen Entladungsgeometrien kann es zu Gleichmäßigkeitsproblemen kommen. In solchen Fällen können mehrere Ferritkoppler, d.h. mehrere Lampenspulen sinnvoll sein. Es sind natürlich auch mehrere Lampen, die aus einem Leistungsgenerator gespeist werden realisierbar.

Bei mehreren Lampenspulen und Ferritkopplern ist prinzipiell eine Serienoder Parallelschaltung oder deren Kombination möglich. Bevorzugt ist jedoch bei hohen Leistungen die Parallelschaltung und bei mehreren Lampen, die von einem Leistungsgenerator betrieben werden, die Serienschaltung. Es gelten die bekannten Rechenregeln für Induktivitäten, Ströme, Spannungen. Bei multiplen Kopplern oder multiplen Lampen sollten die Kopplerinduktivitäten möglichst gleich sein, um gleiche und symmetrische Belastungen im System zu sichern.

Wichtig, aber nicht einschränkend, ist auch eine möglichst hohe Induktivität der Lampenspule L1, und zwar zur Reduzierung des Magnetisierungsstromes. Dazu muss ein Ferritmaterial mit hoher Permeabilität und geringen Variationen sowohl der Anfangs- als auch der Amplitudenpermeabilität verwendet werden und mit einem minimalen Luftspalt und hohem Permeanzfaktor angewandt werden. (Es sind vor allem die Temperaturabhängigkeiten der Permeabilität, die die eingangs beschriebenen Kreisfrequenzverstimmungen hervorrufen können.)

Die Reduzierung des Magnetisierungsstroms des Ferritkopplers L1 wirkt sehr vorteilhaft auf den Phasenwinkel ϕ zwischen der Kopplerspannung U, und dem Kopplerstrom I₁, wie in Fig. 1 eingezeichnet. Bei kleinem Phasenwinkel ϕ ist cos ϕ groß und die Wirkleistung P₁ = U, I₁ cos ϕ, die in die Entladung eingekoppelt wird, hoch. Es ist dabei ersichtlich, dass für eine bestimmte Leistung P₁ der Strom I₁ reduziert werden kann, wenn ϕ bei 10 bis 20° liegt und folglich cos ϕ über 0,95 liegt, anstatt 60° bis 70° wie bei Induktionslampen mit offenem magnetischen Kreis, wo cos ϕ unterhalb 0,5 liegt. Der kleinere Strom I₁ bewirkt einen kleineren Laststrom I_{L2}; dadurch hervorgerufene kleinere Ströme im gesamten Leistungsgenerator bewirken kleinere Verluste und einen höheren Wirkungsgrad des gesamten Systems. Der HF-Generator kann einen sehr hohen Wirkungsgrad haben, weit über 95 %.

Das magnetische Material des Kopplers sollte so gewählt werden, dass im angestrebten Frequenzbereich bei den zu erwartenden Kerntemperaturen (etwa 100 - 120 °C) keine spezifischen Verluste von über 60 mW/cm³ auftreten. Ein geschlossener Magnetkreis mit hoher Induktivität aber geringer Streuinduktivität kommt der Funkentstörung und der Verringerung der Systemscheinleistung zugute.

Mit den genannten spezifischen Ferritverlusten, einer geeigneten Auswahl der Kopplerspule sowie den Ausgangswerten U₁, I₁ und cos ϕ wird eine sehr hohe Energietransfer-Effizienz von 98 bis 99 % erreicht, d.h. die Verluste im Ferritkoppler machen nur 1 bis 2 % der gesamten übertragenen Leistung aus.

## Patentansprüche

1. Freischwingend und resonanznah arbeitende Schaltung zum Betrieb einer elektrodenlosen Niederdruckentladungslampe (E) mit einem die Lampe (E) mit Hochfrequenzleistung beaufschlagenden Lastkreis (CK, CR, L1, L2), einem Hochfrequenz-Leistungsgenerator (HF-Leistungsgenerator) mit Feldeffekttransistoren (TO, TU) und Speicherkondensator (C0) zum Betreiben des Lastkreises und einer Ansteuerschaltung (Ci, CP, CS, LP, LS, TR) zur Ansteuerung des HF-Leistungsgenerator, wobei der Lastkreis (CK, CR, L1, L2) einen seriellen Schwingkreis (CR, L2) mit Koppelkondensator (CK) und einen zu einem Teil (CR) des Schwingkreises parallelliegenden Zweig mit einer die Lampe (E) beaufschlagenden Spule (L1) aufweist und der Resonanzkondensator (CR) mit der Spule (L1) einen parallelen Schwingkreis (L1, CR) bildet und beiden Schwingkreisen angehört, **dadurch gekennzeichnet**, der serielle Schwingkreis (CK, CR, L2) eine strombegrenzende Spule (L2) beinhaltet, die im Betriebszustand im wesentlichen zu der die Lampe (E) beaufschlagenden Spule (L1) hochfrequenzmäßig parallelgeschaltet wirkt, wobei die Induktivität der strombegrenzenden Spule (L2) kleiner als die der die Lampe beaufschlagenden Spule (L1) ist.

2. Schaltung nach Anspruch 1 mit Arbeitsfrequenzen über 70 kHz.

3. Schaltung nach Anspruch 1 oder 2, bei der die Ansteuerschaltung (Ci, CP, CS, LP, LS, TR) dazu ausgelegt ist, die für die Ansteuerung zumindest eines Gates eines Feldeffekttransistors des HF-Leistungsgenerator (T0, TO, TU) erforderliche Spannung durch eine Resonanzspannungsüberhöhung zu erzeugen.

4. Schaltung nach einem der vorstehenden Ansprüche, bei der die Ansteuerschaltung (Ci, CP, CS, LP, LS, TR) einen Transformator (LP, LS, TR) mit Ferritkern (TR) aufweist, der dazu ausgelegt ist, im Betriebszustand im linearen B-H-Ansteuerungsfeld, d.h. im Nichtsättigungsbereich zu arbeiten.

5. Schaltung nach Anspruch 3 und 4, bei der der Transformator (LP, LS, TR) an einen oder zwei Resonanzkreise (LS, CS) angeschlossen ist, um die Resonanzspannungsüberhöhung zu bewirken.

6. Schaltung nach einem der vorstehenden Ansprüche, bei der die Ansteuerschaltung (Ci, CP, CS, LP, LS, TR) eine eine Spannung aus dem Lastkreis (CK, CR, L1, L2) abgreifende Einrichtung (Ci) aufweist, die dazu ausgelegt ist, die Ansteuerschaltung mit geringem Strom, dem Lastkreis (CK, CR, L1, L2) synchron anzutreiben.

7. Schaltung nach Anspruch 1, bei der der HF-Leistungsgenerator (C0, TO, TU) als Halbbrücken-(Class D-), Vollbrücken- oder Ein-Transistor-(Class E-)Leistungsgenerator ausgeführt ist.

## Claims

1. Freewheeling circuit operating close to resonance for the purpose of operating an electrodeless low-pressure discharge lamp (E), having a load circuit (CK, CR, L1, L2) which applies radio-frequency power to the lamp (E), a radio-frequency power generator (RF power generator) with field effect transistors (TO, TU) and a storage capacitor (C0) for operating the load circuit, and a drive circuit (Ci, CP, CS, LP, LS, TR) for driving the RF power generator, the load circuit (CK, CR, L1, L2) having a series resonant circuit (CR, L2), with a coupling capacitor (CK), and a branch which is connected in parallel with a part (CR) of the resonant circuit and has a coil (L1) which is applied to the lamp (E), and the resonance capacitor (CR) forming a parallel resonant circuit (L1, CR) with the coil (L1) and belonging to both resonant circuits, **characterized in that** the series resonant circuit (CK, CR, L2) contains a current-limiting , coil (L2) which in the operating state essentially has the effect of being connected in parallel in terms of radio frequency with the coil (L1) applied to the lamp (E), the inductance of the current-limiting coil (L2) being smaller than that of the coil (L1) applied to the lamp.

2. Circuit according to Claim 1 having operating frequencies above 70 kHz.

3. Circuit according to Claim 1 or 2, in which the drive circuit (Ci, CP, CS, LP, LS, TR) is designed to generate by resonance voltage overshoot the voltage required to drive at least one gate of a field-effect transistor of the RF power generator (C0, TO, TU).

4. Circuit according to one of the preceding claims, in which the drive circuit (Ci, CP, CS, LP, LS, TR) has a transformer (LP, LS, TR) with a ferrite core (TR), which is designed to operate in the operating state in the linear B-H drive field, that is to say in the non-saturation region.

5. Circuit according to Claims 3 and 4, in which the transformer (LP, LS, TR) is connected to one or two resonant circuits (LS, CS), in order to effect the resonance voltage overshoot.

6. Circuit according to one of the preceding claims, in which the drive circuit (Ci, CP, CS, LP, LS, TR) has a device (Ci) which taps a voltage from the load circuit (CK, CR, L1, L2) and which is designed to drive the drive circuit with a low current in a fashion synchronous with the load circuit (CK, CR, L1, L 2).

7. Circuit according to Claim 1, in which the RF power generator (C0, TO, TU) is designed as a half-bridge (Class D) full-bridge or single-transistor (Class E) power generator.

## Revendications

1. Circuit auto-oscillant et opérant à proximité de la résonance d'alimentation d'une lampe (E) à décharge basse pression sans électrodes, comprenant un circuit (CK, CR, L1, L2) de charge alimentant la lampe (E) en une puissance en haute fréquence, un générateur (générateur de puissance HF) de puissance en haute fréquence ayant des transistors (TO, TU) à effet de champ et un condensateur (C0) d'emmagasinage pour l'alimentation du circuit de charge et un circuit (Ci, CP, CS, LP, LS, TR) d'excitation du générateur de puissance HF, le circuit (CK, C L1, L2) de charge comportant un circuit (CR, L2) oscillant série à condensateur (CK) de couplage et une branche en parallèle à une partie (CR) du circuit oscillant et ayant une bobine (L1) alimentant la lampe (E) et le condensateur (CR) de résonance formant avec la bobine (L1) un circuit (L1, CR) oscillant parallèle et appartenant aux deux circuits oscillants, **caractérisé en ce que** le circuit (CK, CR, L2) oscillant série a une bobine (L2) de limitation du courant qui, à l'état de fonctionnement, agit sensiblement comme étant montée en parallèle du point de vue de la haute fréquence à la bobine (L1) alimentant la lampe (E), l'inductance de la bobine (L2) de limitation du courant étant plus petite que celle de la bobine (L1) alimentant la lampe.

2. Circuit suivant la revendication 1 ayant des fréquences de travail supérieures à 70 kHz.

3. Circuit suivant la revendication 1 ou 2, dans lequel le circuit (Ci, CP, CS, LP, LS, TR) d'excitation est conçu pour produire par une surélévation de la tension de résonance la tension nécessaire à l'excitation d'au moins une grille d'un transistor à effet de champ du générateur (C0, TO, TU) de puissance HF.

4. Circuit suivant l'une des revendications précédentes, dans lequel le circuit (Ci, CP, CS, LP, LS, TR) d'excitation a un transformateur (LP, LS, TR) à noyau (TR) de ferrite, qui est conçu pour fonctionner à l'état de fonctionnement dans le domaine d'excitation B-H linéaire, c'est-à-dire dans le domaine de la non saturation.

5. Circuit suivant la revendication 3 et 4, dans lequel le transformateur (LP, LS, TR) est relié à un circuit (LS, CS) de résonance ou à deux circuits (LS, CS) de résonance pour provoquer la surélévation de la tension de résonance.

6. Circuit suivant l'une des revendications précédentes, dans lequel le circuit (Ci, CP, CS, LP, LS, TR) d'excitation a un dispositif (Ci) prélevant une tension du circuit (CK, CR, L1, L2) de charge et conçu pour attaquer le circuit d'excitation par un petit courant en synchronisme avec le circuit (CK, CR, L1, L2).

7. Circuit suivant la revendication 1, dans lequel le générateur (C0, TO, TU) de puissance HF est réalisé sous la forme d'un générateur de puissance en demi-pont (classe D), à pont complet ou à mono-transistor (classe E).
